# EUROPEAN PATENT APPLICATION

(11) **EP 2 200 367 A1**
(43) Date of publication of application: **23.06.2010**
(21) Application number: 09168850.7
(22) Date of filing: 27.08.2009
(51) Int. Cl.: H04W 36/08

(54) **Handover method in mobile communication network based on evolved multimedia broadcast multicast services (e-mbms) architecture**

(30) Priority: 19.12.2008 KR 20080130635
(71) Applicant: Electronics and Telecommunications Research Institute, Daejeon 305-700 (KR)
(72) Inventor: Na, Jee-hyeon, Seoul (KR); Kim, Dae-ik, Daejeon-si (KR); Lee, Sang-ho, Daejeon-si (KR)
(74) Representative: Sieckmann, Dirk Christoph

(57) **Abstract**

Disclosed is a handover method in a mobile communication network based on an Evolved Multimedia Broadcast Multicast Services (E-MBMS) architecture. In more detail, disclosed is a method of performing a handover at a base station which communicates with a mobile terminal which receives a multimedia service in a broadcast mode in a mobile communication network, the method including: generating a handover request message; transmitting the handover request message to a target base station; receiving, from the target base station, a handover acknowledge message including Point to Multi-Point (PTM) radio bearer information associated with a multimedia service which the mobile terminal is currently using in a broadcast mode; and generating a handover command message including the PTM radio bearer information and transmitting the handover command message to the mobile terminal.
Accordingly, while a mobile terminal is receiving mobile IPTV services, service disruption may be minimized.

## Description

### CROSS-REFERENCE TO RELATED APPLICATION

This application claims the benefit under 35 U.S.C. §119(a) of Korean Patent Application No. 10-2008-130635, filed on December 19, 2008, the disclosure of which is incorporated by reference in its entirety for all purposes.

### BACKGROUND

### 1. Field

The following description relates to handover in a mobile communication network, and more particularly, to handover in a mobile communication network based on an Evolved Multimedia Broadcast Multicast Services (E-MBMS) architecture proposed to support TV services.

### 2. Description of the Related Art

A mobile IPTV service in a mobile communication network can enhance the efficiency of resources by using a radio Point to Multi-Point (PTM) scheme which can provide services to a plurality of subscribers through one radio resource allocation. A 3GPP standard which is an example of a standard for mobile communications uses the concept of Multimedia Broadcast Multicast Services (MBMS) to enhance the efficiency of radio resources. Recently, in order to support TV services, an Evolved Multimedia Broadcast Multicast Services (E-MBMS) architecture has been proposed. When TV services are supported using a 3GPP LTE (Long Term Evolution)-based E-MEMS architecture, soft-combining or selective combining utilized in the existing 3GPP MBMS cannot be used and accordingly service interruptions occur when mobile terminals are handed over between cells.

### SUMMARY

The following description relates to a method of supporting seamless handover of mobile terminals between base stations to provide mobile IPTV services through a Point to Multi-Point (PTM) radio bearer in a Long Term Evolution-Advanced (LTE-Advanced) system based on a next-generation mobile communications standard currently being standardized by 3GPP.

According to an exemplary aspect, there is provided a method of performing a handover of a mobile terminal at a source base station, including: generating a handover request message; transmitting the handover request message to a target base station; receiving, from the target base station, a handover acknowledge message including Point to Multi-Point (PTM) radio bearer information associated with a multimedia service which the mobile terminal is currently using in a broadcast mode; and generating a handover command message including the PTM radio bearer information and transmitting the handover command message to the mobile terminal.

The handover method further includes, before the generating of the handover request message, receiving, from the mobile terminal, a measurement reports message including a measured value for signal sensitivity of the mobile terminal and an identifier identifying the multimedia service which the mobile terminal is currently using; and determining whether to perform the handover based on the measured value for signal sensitivity included in the received measurement reports message.

According to another exemplary aspect, there is provided a method of performing a handover at a target base station to which a mobile terminal is handed over, including: receiving a handover request message requesting a handover of a mobile terminal that is using a multimedia service in a broadcast mode, from a source base station which communicates with the mobile terminal; determining whether the target base station provides the multimedia service that the mobile terminal is using; if the target base station provides the multimedia service, transmitting, to the source base station, a handover acknowledge message including Point to Multi-Point (PTM) radio bearer information associated with the multimedia service; and transmitting a service packet through the PTM radio bearer to the mobile terminal handed over to the target base station after the handover acknowledge message has been transmitted to the source base station.

The handover method further includes: if the target base station does not provide the multimedia service, performing registration and session establishment with a Multimedia Broadcast Multicast Services 1 (MBMS) gateway and a MBMS2 gateway, wherein the MBMS1 gateway performs a control protocol for MBMS and the MBMS 2 gateway is in charge of packet transmission for MBMS; after performing the registration and session establishment, transmitting, to the source base station, a handover acknowledge message including Point to Point (FTP) radio bearer information associated with the multimedia service that the mobile terminal is currently using; establishing a PTP radio bearer associated with the multimedia service that the mobile terminal is currently using; and transmitting a service packet through the PTP radio bearer to the mobile terminal handed over to the target base station.

According to another exemplary aspect, there is provided a method of performing a handover of a mobile terminal at a source base station, including: generating a handover request message; receiving, from the target base station, a handover acknowledge message including Point to Point (FTP) radio bearer information associated with a multimedia service which the mobile terminal is currently using in a multicast mode; and generating a handover command message including the PTP radio bearer information and transmitting the handover command message to the mobile terminal.

According to another exemplary aspect, there is provided a method of performing a handover at a target base station to which a mobile terminal is handed over, including: receiving a handover request message requesting a handover of a mobile terminal that is using a multimedia service in a multicast mode, from a source base station which communicates with the mobile terminal; determining whether the handover request message includes Point to Multi-Point (PTM) radio bearer information associated with the multimedia service that the mobile terminal is using; if the handover request message includes the PTM radio bearer information, transmitting a handover acknowledge message including the PTM radio bearer information to the source base station; transmitting a service packet through the PTM radio bearer to the mobile terminal handed over to the target base station after the handover acknowledge message has been transmitted to the source base station.

According to another exemplary aspect, there is provided a method of performing a handover at a mobile terminal, including: at a mobile terminal, receiving a multimedia service from a source base station and transmitting a measurement reports message including a measured value for signal sensitivity to the source base station; if the source base station determines, based on the measurement reports message, that the mobile terminal has to be handed over, receiving a handover command message including Point to Multi-Point (PMP) or Point to Point (PTP) radio bearer information from the source base station; performing a handover of the mobile network to a target base station in response to the handover command message; establishing service channel information based on PTM or PTP radio bearer information contained in the handover command message; and receiving a service through the target base station.

Therefore, when a mobile terminal which receives mobile IPTV services in a mobile communication network based on an Evolved Multimedia Broadcast Multicast Services (E-MBMS) architecture migrates from one cell to another, handover control based on a Radio Resource Control (RRC) layer to minimize service disruption is achieved. Accordingly, services such as mobile IPTV services can be seamlessly provided in a broadcast or multicast mode to a mobile terminal when the mobile terminal migrates from a base station to another base station in a RRC-connected mode. Furthermore, when a mobile terminal deviates from a service region where services are provided in a multicast mode, the services may be provided to the mobile terminal through MBMS transmission from a Broadcast and Multicast Service Center (BM-SC) to a base station and through Point to Point (PTP) transmission from the base station to the mobile terminal.

Other objects, features and advantages will be apparent from the following description, the drawings, and the claims.

### BRIEF DESCRIPTION OF THE DRAWINGS

FIG. 1 is a view for explaining an Evolved Multimedia Broadcast Multicast Services (E-MBMS) architecture in a Long Term Evolution-Advanced (LTE-Advanced) system.
FIG. 2 is a flowchart illustrating an exemplary method of performing a handover of a mobile terminal which receives multimedia services in a broadcast mode in an E-MBMS mobile communication network.
FIG. 3 is a flowchart illustrating another exemplary method of performing a handover of a mobile terminal 101 which receives multimedia services in a broadcast mode in an E-MBMS mobile communication network.
FIG. 4 is a flowchart illustrating an exemplary method of performing a handover of a mobile terminal which receives multimedia services in a multicast mode in an E-MBMS mobile communications network.
FIG. 5 is a reference view for explaining messages and MBMS-reiated information elements that are transmitted/received between a mobile terminal and a base station when a handover occurs while an E-MBMS service is being provided.
FIG. 6 is a reference view for explaining messages and MBMS-related information elements that are transmitted/received between base stations when a handover occurs while an E-MBMS service is being provided.

Elements, features, and structures are denoted by the same reference numerals throughout the drawings and the detailed description, and the size and proportions of some elements may be exaggerated in the drawings for clarity and convenience.

### DETAILED DESCRIPTION

The detailed description is provided to assist the reader in gaining a comprehensive understanding of the methods, apparatuses and/or systems described herein. Various changes, modifications, and equivalents of the systems, apparatuses, and/or methods described herein will likely suggest themselves to those of ordinary skill in the art. Also, descriptions of well-known functions and constructions are omitted to increase clarity and conciseness.

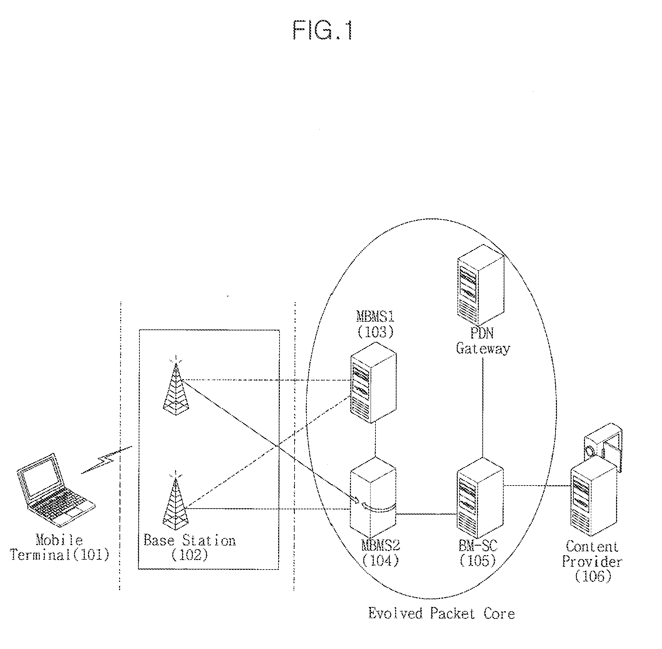

FIG. 1 is a view for explaining an Evolved Multimedia Broadcast Multicast Services (E-MBMS) architecture in a Long Term Evolution-Advanced (LTE-Advanced) system.

In the LTE-Advanced system, a system required for MBMS is composed of a mobile terminal 101, a base station 102, a MBMS1 gateway (simply referred to as MBMS1) 103, a MBMS2 gateway (simply referred to as MBMS2) 104 and a Broadcast and Multicast Service Center (BM-SC) 105. The mobile terminal 101 communicates with the base station 102 based on a LTE-Advanced wireless standard, and acts as a MBMS client. The base station 102 can also communicate with the mobile terminal 101 based on the LTE-Advanced wireless standard, and communicates with the MBMS1 103 and MBMS2 104 for MBMS transmission in an Evolved Packet Core (EPC). The EPC is composed of the MBMS1 103, MBMS2 104 and BM-SC 105. The MBMS1 103 performs a control protocol for MBMS, and the MBMS 2 104 is in charge of packet transmission for MBMS. The BM-SC 105 functions as a center for providing MBMS, and provides the mobile terminal 101 with a mobile IPTV broadcast source provided by a content provider 106 through the LTE-Advanced network. The content provider 106, which provides content via the Internet, provides the BM-SC 105 with content.

Transmission between the mobile terminal 101 and the base station 102 is performed via a LTE-Uu interface. The LTE-Uu interface is based on the LTE-Advanced wireless standard and supports PTM transmission. An interface between the MBMS2 104 and base station 102 is based on multicast traffic transmission which is a path for MBMS data transmission. A control interface between the base station 102 and MBMS1 103 is established for MBMS session control. In a conventional LTE-Advanced system, a control-path protocol between a base station and a MME is based on S1AP or the like. Between the MBMS 2 104 and BM-SC 105 are provided two interfaces: a control plan and data plan, wherein session control for MBMS is performed through the control plan and transmission of MBMS packets is performed through the data plan. No specific transmission protocol is defined between the BM-SC 105 and the content provider 106.

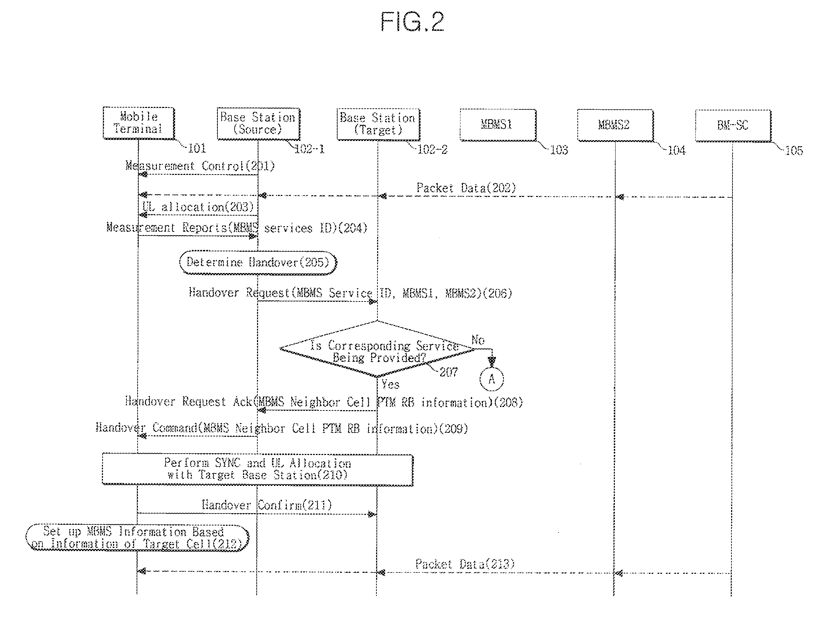

FIG. 2 is a flowchart illustrating a method of performing a handover of a mobile terminal which receives multimedia services such as mobile IPTV services in a broadcast mode in an E-MBMS mobile communication network. In the following description, the multimedia services may also be referred to as MBMS services.

In the case of a broadcast mode MBMS, in a conventional method, a base station cannot recognize what a service received by a mobile terminal is. In the conventional method in which base stations cannot recognize a MBMS service which is received by a mobile terminal, when a MBMS handover of a mobile terminal occurs, a target base station can support a relatively seamless handover only while the target base station is providing the MBMS service, and in order to support such a handover, the target base station has to provide a source base station with all broadcast services that the target base station is providing and the mobile terminal has to decide whether to use any of the broadcast services. This means that even when a target base station supports broadcast services, all mobile terminals have to receive all MBMS service information that the target base station serves even if some mobile terminals do not receive such MBMS services, which leads to a large message overhead, an increase in processing time and handover delays. Furthermore, in the case where the target base station does not support the broadcast service that has being received by the mobile terminals, service continuity is not guaranteed.

Accordingly, in the embodiment illustrated in FIG. 2, in order for a base station to acquire broadcast mode MBMS service information when a mobile terminal to be handed over receives the MBMS service, a measurement control message is used. If such a measurement control message with information about services being received is transmitted, the base station can acquire only radio bearer information needed for a handover procedure, and accordingly the complexity of mobile terminals and base stations and capacities of handover messages may be reduced without affecting mobile terminals that do not receive MBMS services.

Now, the handover procedure will be described with respect to FIG. 2. First, when a source base station 102-1 transmits, to a mobile terminal 101, a measurement control message to measure signal sensitivity of the mobile terminal 101, the mobile terminal 101 which receives MBMS packets is assigned a uplink (UL) and then transmits a measurement reports message with measured radio parameter values through the UL to the source base station 102-1 (operations 201, 202, 203 and 204). At this time, the mobile terminal 101 includes a MBMS service ID in the measurement reports message. The source base station 102-1 receives the measurement reports message from the mobile terminal 101 and determines whether to perform a handover based on the measured radio parameter values included in the measurement reports message (operation 205). Then, the source base station 102-1 transmits a handover request message to a target base station 102-2 (operation 206). The handover request message includes a MBMS service ID, a MBMS1 address and a MBMS2 address.

The target base station 102-2 which has received the handover request message determines whether it serves the MBMS service indicated by the MBMS service ID included in the handover request message (operation 207). If the target base station 102-2 serves the MBMS service, the target base station 102-2 includes PTM radio bearer (RB) information (MBMS Neighbor Cell PTM RB information) associated with the MBMS service ID in a handover acknowledge message (HandoverRequestAck) and transmits the HandoverRequestAck message to the source base station 102-1 (operation 208). The source base station 102-1 which has received the HandoverRequestAck message transmits a handover command message containing the MEMS Neighbor Cell PTM RB information to the mobile terminal 101 (operation 209). The mobile terminal 101 which has received the handover command message performs synchronization (SYNC) and UL allocation with the target base station 102-2, and transmits a handover confirmation message to the target base station 102-2 (operations 210 and 211). Then, the mobile terminal 101 sets up MBMS channel information based on the MBMS Neighbor Cell PTM RB information (operation 212). Thereafter, the mobile terminal 101 receives MBMS packets through the MBMS PTM radio bearer provided by the target base station 102-2 (operation 213).

Meanwhile, the source base station 102-1 may include, in the handover request message, a MBMS indicator (MBMS Ind) indicating whether the mobile terminal 101 receives the MBMS service and then may transmit the handover request message to the target base station 102-2. This is aimed at preventing the handover from being delayed due to mobile terminals that do not receive the MBMS service.

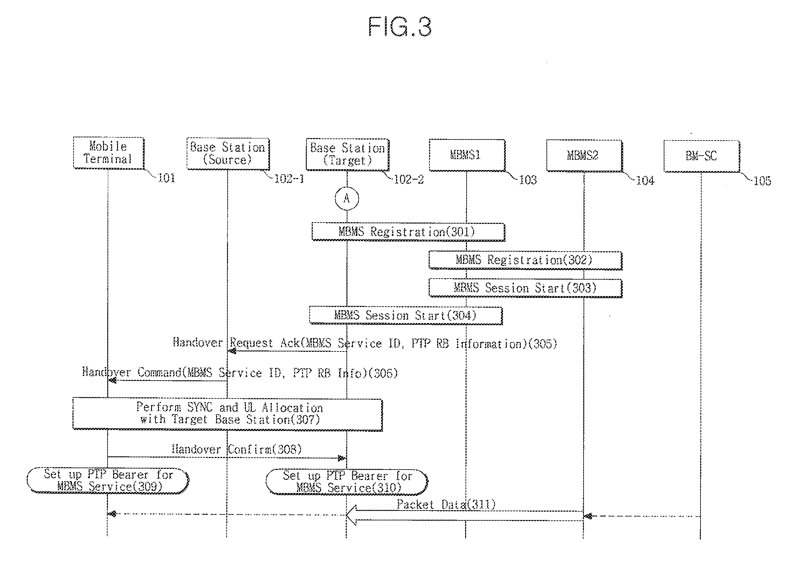

FIG. 3 is a flowchart illustrating a method of performing a handover of a mobile terminal 101 which receives multimedia services in a broadcast mode in an E-MBMS mobile communication network.

Referring to FIG. 3, when a target base station 102-2 does not support a MBMS service which the mobile terminal 101 is using through a source base station 102-1, it is considered that the target base station 102-2 is not within a broadcast service region for MBMS. In this case, the target base station 102-2 performs a MBMS registration procedure with a MBMS1 103, and the MBMS1 103 performs the MBMS registration procedure through a MBMS2 104 (operations 301 and 302). The MBMS2 104 performs a MBMS session start procedure for a MBMS service being currently provided, together with the MBMS1 103, and the MBMS1 103 performs the MBMS session start procedure with the target base station 102-2 (operations 303 and 304).

The procedures are performed to transmit MBMS packets from a BM-SC 105 to the target base station 102-2 in the same way as when transmitting normal MBMS packets. The target base station 102-2, in order to support MBMS services not supported in a broadcast mode, prepares Point-to-Point (PTP) transmission between the target base station 102-2 and the mobile terminal 101, sets up PTP RB information based on QoS parameters when a session starts, and transmits a Handover Request Ack message including the PTB RB information and a MBMS service ID to the source base station 102-1 (operation 305).

The source base station 102-1 transmits a Handover Command message including PTP RB information corresponding to the MBMS service ID to the mobile terminal 101 (operation 306). The mobile terminal 101 performs synchronization and UL allocation with the target base station 102-2 according to a general handover procedure, and transmits a handover confirmation message to the target base station 102-2, thus informing the target base station 102-2 of the fact that the handover has been completed (operations 307 and 308). The mobile terminal 101 and target base station 102-2 select PTP bearer settings for the MBMS service (operations 309 and 310). Accordingly, the corresponding MBMS service packets are transmitted to the mobile terminal 101 through the PTP bearer established between the target base station 102-2 and mobile terminal 101 (operation 311).

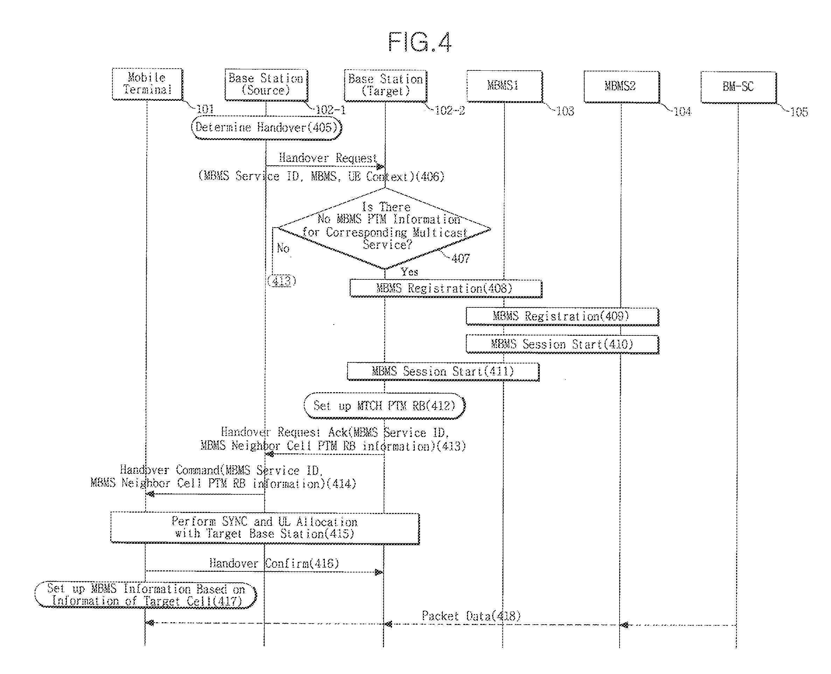

FIG. 4 is a flowchart illustrating a method of performing a handover of a mobile terminal which receives multimedia services in a multicast mode in an E-MBMS mobile communications network.

The handover method is to add information elements for MBMS and several procedures to basic procedures needed to perform a handover of a mobile terminal 101 between base stations in a RRC-connected mode. First, if a source base station 102-1 transmits a measurement control message for measuring signal sensitivity of the mobile terminal 101 to the mobile terminal 101, the mobile terminal 101 that is receiving MBMS packets is allocated a Uplink (UL), and then transmits a measurement reports message with measured radio parameter values of the mobile terminal 101 to the source base station 102-1 through the UL. In a multicast mode, since the source base station 102-1 always manages services that the mobile terminal 101 is receiving, the source base station 102-1 can recognize a corresponding MBMS service ID without the mobile terminal 101 having to include the MBMS service ID in a measurement reports message.

The source base station 102-1 receives the measurement reports message from the mobile terminal 101 and determines whether to perform a handover of the mobile terminal 101 based on the measured radio parameters values included in the measurement reports message (operation 405). The source base station 102-1 includes a MBMS service ID and MBMS UE context information in the handover request message and transmits the resultant handover request message to a target base station 102-2 (operation 406). The target base station 102-2 checks whether there is bearer information for a corresponding multicast service (operation 407). If there is no bearer information for the corresponding multicast service, this means that the target base station 102-2 does not yet support the multicast service and accordingly performs a MBMS registration procedure with a MBMS1 103 to support the multicast service (operation 408). The MBMS1 103 performs the MBMS registration procedure through a MBMS2 104 (operation 409). The MBMS2 104 also performs a MBMS session start procedure for a MBMS which is currently provided, together with the MBMS1 103, and the MBMS1 103 performs a MBMS session start procedure with the target base station 102-2 (operations 410 and 411).

The target base station 102-2 sets up MTCH PTM RB information which is a traffic channel of MBMS, according to the MBMS session start procedure, and transmits a Handover RequestAck Message including the MTCH PTM RB information to the source base station 102-1 (operations 412 and 413). If it is determined in operation 407 that there is bearer information for the corresponding multicast service, the target base station 102-2 transmits a Handover Request Ack message including the bearer information to the source base station 102-1.

The source base station 102-1 transmits a Handover Command message including the corresponding MBMS Service ID and MBMS Neighbor Cell PTM RB information to the mobile terminal 101 (operation 414). Then, the mobile terminal 101 performs synchronization and UL allocation with the target base station 102-2, transmits a handover confirmation message to the target base station 102-2 and sets up MBMS channel information based on the MBMS PTM RB information provided by the target base station 102-2 (operations 415, 416 and 417). Then, the mobile terminal 101 receives a mobile IPTV service through the target base station 102-2 (operation 418).

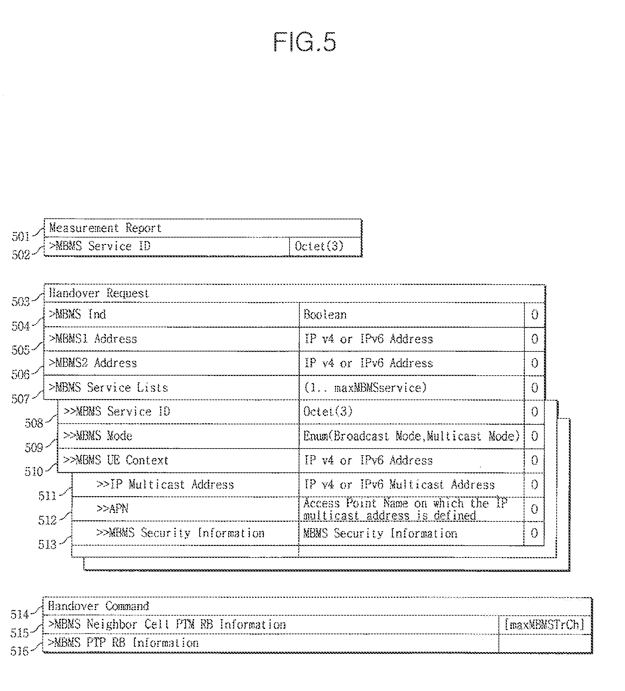

FIG. 5 is a reference view for explaining information elements for a Radio Resource Control (RRC) message which is transmitted/received between a mobile terminal and a base station to provide a mobile IPTV service.

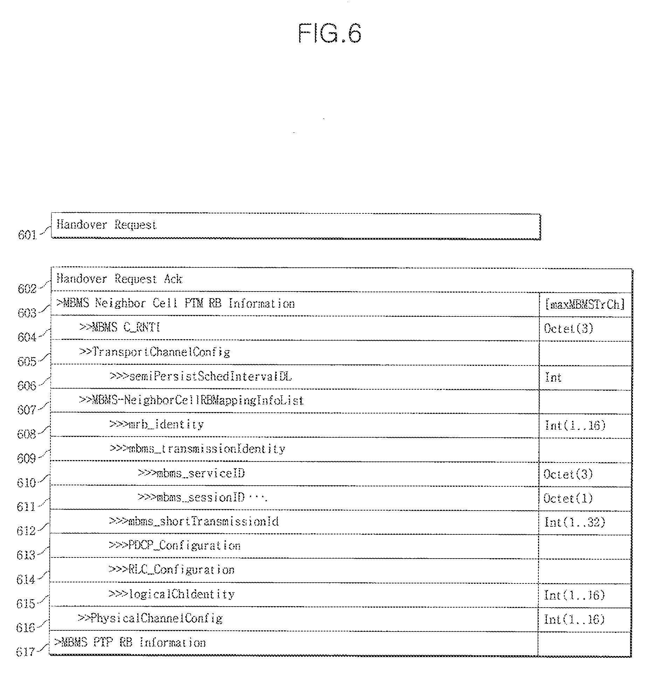

A measurement reports message 501, which is used to determine whether to perform a handover when the handover starts, includes a MBMS service ID 502. A handover request message 503 includes a MBMS identifier (MBMS Ind) 504 indicating whether or not to receive a MBMS service, MBMS service lists 507 that are information about MBMS services, MBMS service IDs 508 for the MBMS services, a MBMS mode 509 indicating whether the corresponding MBMS is a broadcast mode or a multicast mode, a MBMS1 address 505, a MBMS2 address 506, and MBMS UE context information 510. In the multicast mode, the MBMS UE context information 510 includes an IP multicast address 511 which is context information for a mobile terminal, APN 512 which is access point name information in which the IP multicast address 511 is included, and MBMS security information 513. The MBMS Ind 504 indicates whether or not to use a MBMS service, and is used to reduce the amount of time required for handovers of terminals that do not use any MBMS service. Also, in case a mobile terminal moves while using a plurality of MBMS services, the plurality of MBMS service lists 507 are defined to provide a plurality of pieces of MBMS service information. A handover command message 514 which commands a handover includes MBMS PTM RB information (MBMS Neighbor Cell PTM RB Information) 515 and MBMS PTP RB Information 516 for a target base station. The MBMS PTM RB information 515 and MBMS PTP RB information 516 contain all content included in a X2AP protocol, that are messages transmitted/received between base stations. A description thereof will be described in more detail with reference to FIG. 6, below.

FIG. 6 shows information elements added for MBMS upon a handover in X2AP messages that are transmitted/received between base stations.

First, a Handover Request message 601 transmitted from a source base station to a target base station includes all information elements illustrated in FIG. 5. A Handover RequestAck message 602 generated by the target base station may include a PTM information element or a PTP information element. In the case where the Handover RequestAck message 602 includes a PTM information element, the MBMS Neighbor Cell PTM RB information 603 includes MBMS C_RNTI 604 which is unique RNTI information in a corresponding cell for MBMS, transport channel configuration information 605 including semipersist scheduling interval information 606 used for MBMS downlink data transmission, MBMS Neighbor Cell RB Mapping Information Lists 607 and Physical Channel Configuration information 616. The MBMS Neighbor Cell RB Mapping Information Lists 607 include mrb_dentity 608 which is a radio bearer identifier for MBM, a MBMS_transmission Identity 609 composed of a MBMS service ID 610 and a MBMS session ID 611, a MBMS short transmission ID 612 which is a short identifier for MBMS included in a RRC message such as MBMS Modified Service information, etc., PDCP configuration 613 for a MBMS bearer, RLC configuration 614 and a logical channel ID 615. The physical channel configuration information 616 is composed of the same information element as information to set up a general radio bearer. The MBMS PTP information 617, which is PTP information for a MBMS service ID, is composed of the same information element as general FTP information.

It will be apparent to those of ordinary skill in the art that various modifications can be made to the exemplary embodiments of the invention described above. However, as long as modifications fall within the scope of the appended claims and their equivalents, they should not be misconstrued as a departure from the scope of the invention itself.

## Claims

1. A method of performing a handover of a mobile terminal at a source base station, comprising:
generating a handover request message;
transmitting the handover request message to a target base station;
receiving, from the target base station, a handover acknowledge message including Point to Multi-Point (PTM) radio bearer information associated with a multimedia service which the mobile terminal is currently using in a broadcast mode; and
generating a handover command message including the PTM radio bearer information and transmitting the handover command message to the mobile terminal.

2. The method of claim 1, before the generating of the handover request message, further comprising:
receiving, from the mobile terminal, a measurement reports message including a measured value for signal sensitivity of the mobile terminal and an identifier identifying the multimedia service which the mobile terminal is currently using; and
determining whether to perform the handover based on the measured value for signal sensitivity included in the received measurement reports message.

3. The method of claim 2, wherein the handover request message includes the identifier identifying the multimedia service which the mobile terminal is currently using.

4. The method of claim 3, wherein the handover request message further includes IP address information of a first Multimedia Broadcast Multicast Services (MBMS) server, and IP address information of a second MBMS server, wherein the first MBMS server performs a control protocol for MBMS and the second MBMS server is in charge of packet transmission for MBMS.

5. A method of performing a handover at a target base station to which a mobile terminal is handed over, comprising:
receiving a handover request message requesting a handover of a mobile terminal that is using a multimedia service in a broadcast mode, from a source base station which communicates with the mobile terminal;
determining whether the target base station provides the multimedia service that the mobile terminal is using;
if the target base station provides the multimedia service, transmitting, to the source base station, a handover acknowledge message including Point to Multi-Point (PTM) radio bearer information associated with the multimedia service; and
transmitting a service packet through the PTM radio bearer to the mobile terminal handed over to the target base station after the handover acknowledge message has been transmitted to the source base station.

6. The method of claim 5, further comprising:
if the target base station does not provide the multimedia service, performing registration and session establishment with a first Multimedia Broadcast Multicast Services (MBMS) server and a second MBMS server, wherein the first MBMS server performs a control protocol for MBMS and the second MBMS server is in charge of packet transmission for MBMS;
after performing the registration and session establishment, transmitting, to the source base station, a handover acknowledge message including Point to Point (PTP) radio bearer information associated with the multimedia service that the mobile terminal is currently using;
establishing a PTP radio bearer associated with the multimedia service that the mobile terminal is currently using; and
transmitting a service packet through the PTP radio bearer to the mobile terminal handed over to the target base station.

7. A method of performing a handover of a mobile terminal at a source base station, comprising:
generating a handover request message;
receiving, from the target base station, a handover acknowledge message including Point to Point (PTP) radio bearer information associated with a multimedia service which the mobile terminal is currently using in a multicast mode; and
generating a handover command message including the PTP radio bearer information and transmitting the handover command message to the mobile terminal.

8. The method of claim 7, before the generating of the handover request message, further comprising:
receiving, from the mobile terminal, a measurement reports message including a measured value for signal sensitivity of the mobile terminal and an identifier identifying the multimedia service which the mobile terminal is currently using; and
determining whether to perform the handover based on the measured value for signal sensitivity included in the received measurement reports message.

9. The method of claim 8, wherein the handover request message includes an identifier identifying the multimedia service which the mobile terminal is currently using, an IP multicast address which is context information about the mobile terminal, and access point name (APN) information including the IP multicast address.

10. The method of claim 9, wherein the handover request message further includes IP address information of a first Multimedia Broadcast Multicast Services (MBMS) server which performs a control protocol for MBMS, and IP address information of a second MBMS server which is in charge of packet transmission for MBMS.

11. A method of performing a handover at a target base station to which a mobile terminal is handed over, comprising:
receiving a handover request message requesting a handover of a mobile terminal that is using a multimedia service in a multicast mode, from a source base station which communicates with the mobile terminal;
determining whether the handover request message includes Point to Multi-Point (PTM) radio bearer information associated with the multimedia service that the mobile terminal is using;
if the handover request message includes the PTM radio bearer information, transmitting a handover acknowledge message including the PTM radio bearer information to the source base station;
transmitting a service packet through the PTM radio bearer to the mobile terminal handed over to the target base station after the handover acknowledge message has been transmitted to the source base station.

12. The method of claim 11, wherein the handover request message includes an identifier identifying the multimedia service that the mobile terminal is currently using, an IP multicast address which is context information about the mobile terminal, and access point name (APN) information including the IP multicast address.

13. The method of claim 11, further comprising:
if the handover request message does not include the PTM radio bearer information, performing registration and session establishment with a first Multimedia Broadcast Multicast Services (MBMS) server and a second MBMS server, wherein the first MBMS server performs a control protocol for MBMS and the second MBMS server is in charge of packet transmission for MBMS;
establishing PTM radio bearer information associated with a traffic channel for MBMS and transmitting a handover acknowledge message including the PTM radio bearer information to the source base station, according to a procedure for the session establishment; and
transmitting a service packet through the PTM radio bearer to the mobile terminal handed over to the target base station.

14. A method of performing a handover at a mobile terminal, comprising:
at a mobile terminal, receiving a multimedia service from a source base station and transmitting a measurement reports message including a measured value for signal sensitivity to the source base station;
if the source base station determines, based on the measurement reports message, that the mobile terminal has to be handed over, receiving a handover command message including Point to Multi-Point (PMP) or Point to Point (PTP) radio bearer information from the source base station;
performing a handover of the mobile network to a target base station in response to the handover command message;
establishing service channel information based on PTM or PTP radio bearer information contained in the handover command message; and
receiving a service through the target base station.

15. The method of claim 14, wherein if the mobile terminal receives the multimedia service in the broadcast mode, the measurement reports message includes an identifier of the multimedia service.
